# EUROPÄISCHE PATENTSCHRIFT

(11) **EP 2 958 694 B1**
(45) Veröffentlichungstag und Bekanntmachung des Hinweises auf die Patenterteilung: **19.09.2018**
(21) Anmeldenummer: 14703096.9
(22) Anmeldetag: 07.02.2014
(51) Int. Cl.: B23B 31/34, B23B 31/30, B23B 31/12, B23B 31/177

(54) **SCHWENK-SPANNFUTTER**
PIVOTING COLLET CHUCK
MANDRIN DE SERRAGE PIVOTANT

(30) Priorität: 19.02.2013 EP 13155700
(43) Veröffentlichungstag der Anmeldung: 30.12.2015
(73) Patentinhaber: SMW-AUTOBLOK Spannsysteme GmbH, 88074 Meckenbeuren (DE)
(72) Erfinder: MAURER, Eckhard, 88094 Oberteuringen (DE); DEININGER, Harald, 88048 Friedrichshafen (DE)
(74) Vertreter: Engelhardt, Volker
(86) Internationale Anmeldenummer: PCT/EP2014/052452
(87) Internationale Veröffentlichungsnummer: WO 2014/128014

(56) Entgegenhaltungen:
- EP-A1- 0 258 557
- DE-B- 1 214 974
- GB-A- 2 015 391
- US-A- 2 980 432
- US-A1- 2003 011 146

## Beschreibung

Die Erfindung bezieht sich auf ein Schwenk-Spannfutter nach dem Oberbegriff des Patentanspruches 1.

Ein solches Schwenk-Spannfutter ist beispielsweise aus der DE 1 214 974 B bekannt.

Spannfutter sind seit Jahrzehnten bekannt und werden u.a. dazu eingesetzt, Muffen, also rotationssymmetrische Werkstücke, ortsfest an Werkzeugmaschinen zu halten, um ein Innengewinde in diese einzuarbeiten, die anschließend für Gas- oder Rohrleitungen als Verbindungs- und Dichtungselemente eingesetzt werden. Die herzustellenden Innengewinde sind selbstdichtend, so dass an die Anfertigung solcher Gewinde eine hohe Präzision zu stellen ist.

Je größer der Außendurchmesser solchen Muffen zu wählen ist, desto größer ist der Innendurchmesser eines Futterkörpers des Spannfutters auszugestalten, um das zu bearbeitende Werkstück überhaupt aufnehmen zu können. Darüber hinaus ist es erforderlich, dass die Innengewinde von beiden offenen Stirnseiten der Muffe in die Innenwand eingearbeitet werden, so dass die Muffe, nachdem das erste Innengewinde eingearbeitet ist, um 180° zu verschwenken ist.

Es ist auch bekannt, beispielsweise aus den Druckschriften DE 1 214 974 B oder GB 2,015,391 A, für die Einspannung der Muffe zwei oder mehr Spannbacken vorzusehen, durch die nach deren Zustellung die Muffe zentrisch zu der Längsachse des Spannfutters positioniert ist. Die Bearbeitungspräzision hängt im Wesentlichen von der Zentrierung der Muffe bezogen auf deren Längsachse, die fluchtend zu der Längsachse der Werkzeugmaschine ausgerichtet ist, ab.

Bei sogenannten Zweibacken-Schwenk-Spannfuttern hat sich nachteiliger Weise herausgestellt, dass die Positionierung des zu bearbeitenden Werkstückes äußerst schwierig zu bewerkstelligen ist, denn die in Richtung der Gewichtskraft untere Spannbacke ist fest in dem Futterkörper bzw. an einem drehbar an dem Futterkörper angelenkten Schwenkring abgestützt, so dass eine Höhenregulierung dieser Spannbacke nicht möglich ist. Die gegenüberliegende Spannbacke ist zwar relativ zu dem Futterkörper radial beweglich, jedoch kann die Muffe, sollte das Zentrum der Muffe unterhalb der Längsachse des Futterkörpers angeordnet sein, nicht angehoben werden können, so dass anschließend die untere Spannbacke mit Unterlagsscheiben, Distanzplatten und dgl. aufzufüttern ist, deren Dicke an die vorhandene Abweichung anzupassen ist. Solche Einstellungsmaßnahmen sind zeitintensiv und müssen jedes Mal, wenn eine neue Charge von Muffen zu bearbeiten ist, wiederholt werden.

Zweibacken-Schwenk-Spannfutter können zwar groß bemessene Innendurchmesser von Muffen aufnehmen und diese können auch innerhalb des Futterkörpers um 180° gedreht werden, jedoch weisen solche Zweibacken-Schwenk-Spannfutter den Nachteil auf, dass die auftretenden Bearbeitungskräfte, die insbesondere senkrecht zu der Einspannrichtung verlaufen, nicht optimal abgestützt werden können, so dass durch die Bearbeitungskräfte die Muffe aus der zentrischen Position herausgedrückt werden könnte. Zudem ist das Werkstück zwischen zwei Spannbacken eingedrückt. Je größer die Einspannkräfte sind, des do größer ist die Gefahr, dass das Werkstück elastisch oder sogar plastisch verformt ist. Dies führt zu Bearbeitungsfehlern oder zu einer unbrauchbaren Muffe.

Sobald jedoch im Bereich der seitlichen bzw. horizontalen Ebenen weitere Spannbacken vorgesehen werden, können solche großdimensionierten Muffen nicht mehr gedreht werden, da diese Spannbacken Raum einnehmen, der für die Verdrehung der Muffe benötigt wird.

Wenn demnach mehrere Spannbacken, beispielsweise drei Spannbacken, verwendet werden, können ausschließlich kleiner dimensionierte Muffen bearbeitet bzw. eingespannt werden.

Aus der DE 1 214 974 ist ein Zweibacken- oder Mehrbacken-Spannfutter zu entnehmen, durch das eine möglichst gleichmäßige Wandstärke des Futterkörpers zur Verfügung gestellt werden soll. Insbesondere die radiale Zustellung der Spannbacken, die synchron zu erfolgen hat, um eine zentrische Einspannung der Muffe zu erreichen, wird mit Hilfe eines Hydraulikkreislaufes gelöst, durch den ein jeder Spannbacke zugeordneter Spannkolben axial in dem Schwenkring verfahren ist, wobei der Spannkolben in trieblicher Wirkverbindung mit einer der Spannbacken steht.

Aus der US 4,811,963 ist zu entnehmen, mit weichen konstruktiven Maßnahmen der Schwenkring um 180° bezogen auf den Futterkörper mit einer eingespannten Muffe gedreht werden kann. Zu diesem Zweck sind in dem Futterkörper zwei axial bewegliche Zahnstangen vorgesehen. Die beiden Zahnstangen verlaufen parallel zueinander in einer Ebene und wirken gemeinsam auf ein Antriebsrad, das in trieblicher Wirkverbindung mit einem der Drehzapfen des Schwenkringes steht. Die beiden Zahnstangen werden gegenläufig zueinander bewegt und jeder Hub der jeweiligen Zahnstange bewirkt eine Verdrehung des Antriebsrades, durch das der Drehzapfen in Rotation versetzt ist.

Daher kann der Schwenkring ausschließlich um 180° bewegt werden, denn anschließend befinden sich die Zahnstangen in ihrer Endstellung und sind in die Ausgangsstellung zurückzuziehen, so dass der Schwenkring permanent um 180° gedreht wird.

Die bekannt gewordenen Mehrbacken-Schwenk-Spannfutter weisen nachteiliger Weise einen Außendurchmesser von mindestens 750 Millimeter und einen Innendurchmesser von etwa 185 Millimeter auf, um den erforderlichen Bauraum zur Aufnahme der Zahnstangen zur Verfügung zu stellen, da solche Spannfutter an Werkzeugmaschinen mit einem begrenzten Arbeitsraum anzubringen sind, nehmen diese bekannten Spannfutter einen erheblichen Platz ein, der für den Arbeitsbereich nicht mehr zur Verfügung steht.

Insbesondere wenn drei Spannbacken und drei Ausgleichsbacken vorzusehen sind, um die Zustell- und Spannkräfte von drei Spannbacken derart zu reduzieren, dass die auf die Werkstückoberfläche einwirkenden Einspannkräfte dieses nicht verformen oder zerstören, sondern vielmehr gleichmäßig verteilt sind, verringert sich der Innendurchmesser des Spannfutters erheblich, so dass ausschließlich Werkstücke mit einem geringen Außendurchmesser eingespannt werden können.

Darüber hinaus ist die Wandstärke des Futterkörpers im Bereich der Zahnstangen groß zu bemessen, um genügend Bauraum für die Aufnahme der Zahnstangen und der jeweiligen Zustellglieder zur Verfügung zu haben. Nachteiliger Weise bauen solchen Futterkörper sehr groß und weisen beispielsweise einen Außendurchmesser von 760 Millimeter bei einem Innendurchmesser von 160 Millimeter auf.

Es ist daher Aufgabe der Erfindung, ein Spannfutter der eingangs genannten Gattung weiter zu bilden, an dem mindestens drei Spannbacken vorgesehen sind, durch die die Zentrierung und Arretierung des Werkstückes an dem Futterkörper bewerkstelligt und gleichzeitig der Außendurchmesser des Futterkörpers maximal 400 Millimeter bei einem Innendurchmesser von etwa 180 Millimeter beträgt, um den Platzbedarf des Spannfutters zu verringern. Das Spannfutter soll demnach kompakt bauen und dabei möglichst groß bemessene Werkstücke aufnehmen können.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass die Spannachsen der Spannbacken versetzt zu der von den Drehzapfen gebildeten Schwenkachse verlaufen, dass die Zustelleinrichtung der mindestens drei Spannbacken aus einem Synchronring gebildet ist, der parallel zu der Längsachse des Futterkörpers in dem Schwenkring verschiebbar gelagert ist, dass an dem Synchronring im Bereich der jeweiligen Spannbacke eine geneigt verlaufende Antriebsfläche bezogen auf die Längsachse des Futterkörpers angearbeitet ist und dass an der jeweiligen Spannbacke eine Anlagefläche vorgesehen ist, die mit der Antriebsfläche des Synchronrings derart zusammenwirkt, dass die Spannbacken radial aus dem Schwenkring bewegt sind, entsteht ein äußerst kompaktes Spannfutter, denn die zur Verstellung der Spannbacken notwendigen Bauteile und die zur Verdrehung des Schwenkringes vorhandenen Antriebsmittel sind platzsparend im Futterkörper oder im Schwenkring eingebaut. Folglich kann der Außendurchmesser des Futterkörpers auf etwa 400 Millimeter bei einem Innendurchmesser von etwa 180 Millimeter begrenzt werden. Dies bewirkt eine Reduzierung des Bauraumes gegenüber dem bekannt gewordenen Stand der Technik um fast 50 Prozent, obwohl der Innendurchmesser des Futterkörpers in etwa gleich groß bemessen ist wie bei Ring-Schwenk-Spannfuttern nach dem Stand der Technik. Demnach können nahezu gleich groß bemessene Muffen oder andere rotationsymmetrische Werkstücke in dem Futterkörper eingespannt und bearbeitet werden.

Durch diese konstruktiven Maßnahmen verringern sich die Herstellungskosten des Futterkörpers, da erhebliches Material für die Herstellung des Futterkörpers eingespart werden kann. Gleichzeitig verringert sich auch die Gewichtskraft des Futterkörpers um nahezu 50 Prozent im Vergleich mit herkömmlichen Futterkörpern.

Der Bedienkomfort der bisherigen Spannfutter ist nach wie vor gegeben, da die Spannbacken mittels des hydraulischen oder pneumatischen Steuerkreislaufes und durch den Synchronring, der im Inneren des Spannringes axial beweglich angeordnet ist, gleichmäßig radial zustellbar sind, so dass das einzuspannende Werkstück zentrisch zu der Längsachse des Futterkörpers ausgerichtet ist.

Zudem weist das erfindungsgemäße Spannfutter den Vorteil auf, dass während der Verschwenkung des Werkstückes ein Beenden der Rotation des Futterkörpers und des Schwenkringes nicht erforderlich ist. Vielmehr kann der Schwenkring um 180° bewegt werden, obwohl der Futterkörper und folglich auch der Schwenkring noch rotieren. Da ein Abschalten des Futterkörpers und des Schwenkringes vermieden ist, während der Schwenkring um 180° verdreht ist, entstehen geringere Stillstandszeiten für die Bearbeitung des Werkstückes. Die Verdrehung des Schwenkringes, während der Futterkörper beispielsweise mit der halben Umdrehungsgeschwindigkeit im Vergleich mit der Umdrehungsgeschwindigkeit während des Bearbeitungsvorganges rotiert, ist dadurch erreicht, dass die Drehzapfen, die die gemeinsame Schwenkachse bilden, in ständiger kraft- oder formschlüssiger Wirkverbindung mit dem Schwenkring stehen, so dass dieser zuverlässig an dem Futterkörper arretiert ist. Auch die Einleitung der Verdrehkräfte auf die beiden Drehzapfen ermöglicht die Rotation des Schwenkringes um die Längsachse des Futterkörpers bei gleichzeitiger Verdrehung, denn die Kräfte wirken entlang der Schwenkachse, so dass nahezu keine störenden Drehmomente entstehen.

In der Zeichnung ist ein erfindungsgemäßes Ausführungsbeispiel eines Schwenk-Spannfutters dargestellt, das nachfolgend näher erläutert ist. Im Einzelnen zeigt:
- Figur 1: ein Schwenk-Spannfutter mit einem Futterkörper und einem in diesen eingesetzten Schwenkring, an dem drei Spannbacken radial zustellbar gelagert sind, in Draufsicht,
- Figur 2: das Spannfutter gemäß Figur 1 entlang der Schnittlinie II-II,
- Figur 3: das Spannfutter gemäß Figur 2 in perspektivischer Ansicht,
- Figur 4a: das Spannfutter gemäß Figur 1 entlang der Schnittlinie IVa-IVa,
- Figur 4b: das Spannfutter gemäß Figur 1 entlang der Schnittlinie IVb-IVb,
- Figur 5a: das Spannfutter gemäß Figur 1 entlang der Schnittlinie Va-Va,
- Figur 5b: das Spannfutter gemäß Figur 1 entlang der Schnittlinie Vb-Vb und
- Figur 6: das Spannfutter gemäß Figur 1 entlang der Schnittlinie VI-VI.

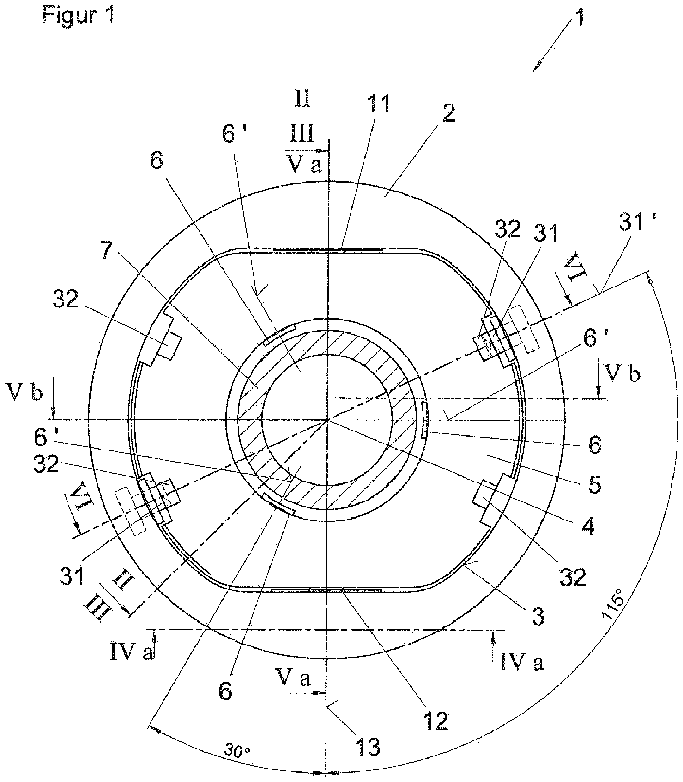

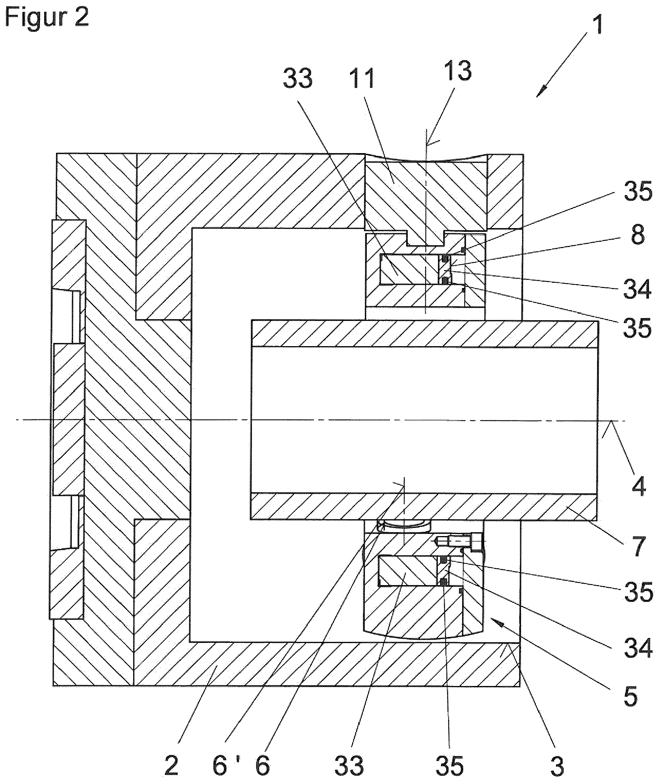

In den Figuren 1 und 2 ist ein Schwenk-Spannfutter 1 zu entnehmen, durch das ein rotationssymmetrisches Werkstück 7, beispielsweise eine Muffe, an einer nicht dargestellten Werkzeugmaschine zentrisch gehalten ist, um ein Innengewinde in die Muffe 7 einzuarbeiten. Solche Muffen 7 werden üblicherweise als Verbindungs- und Dichtungselemente für Rohrstücke genutzt, durch die eine Gas- oder Ölleitung gebildet ist. Die Muffen 7 weisen ein selbstdichtendes Innengewinde auf, so dass an die Fertigung dieses Gewindes eine hohe Präzisionsanforderung besteht. Folglich sind die Muffen 7 zentrisch zu der Längsachse 4 der Werkzeugmaschine und damit zu der Längsachse 4 des Spannfutters 1 auszurichten.

Das Spannfutter 1 besteht aus einem Futterkörper 2, in dem zentrisch zu dessen Längsachse 4 eine Aufnahmeöffnung 3 eingearbeitet ist. Die Aufnahmeöffnung 3 ist im Wesentlichen an die runde Außenkontur des Werkstückes 7 angepasst.

Des Weiteren ist in die Aufnahmeöffnung 3 des Futterkörpers 2 ein Schwenkring 5 eingesetzt, der trieblich mit dem Futterkörper 2 verbunden ist. Für die Bearbeitung des Werkstückes 7 ist der Futterkörper 2 nämlich in Rotation um die Längsachse 4 versetzt; die Rotation des Futterkörpers 2 wird auf den Schwenkring 5 übertragen, so dass zwischen dem Futterkörper 2 und dem Schwenkring 5 während des Bearbeitungsvorganges keine Relativbewegungen vorliegen.

Zur Arretierung des Werkstückes 7 sind in dem Schwenkring 5 drei Spannbacken 6 radial beweglich gelagert, die mittels einer Zustelleinrichtung 8 synchron in Richtung des Werkstückes 7 zugestellt sind. Durch die drei Spannbacken 6 ist demnach das Werkstück 7 in dem Schwenkring 5 zentrisch fixiert.

Im vorliegenden Ausführungsbeispiel sind an dem Schwenkring 5 drei Spannbacken 6 angeordnet, die in einem Teilungswinkel von 120° zueinander beabstandet sind. Es ist ohne weiteres denkbar, mehr als drei Spannbacken 6 an dem Schwenkring 5 anzubringen, und zwar insbesondere dann, wenn der Innendurchmesser der Aufnahmeöffnung 3 größer ausgestaltet werden kann.

Zudem ist der Schwenkring 5 in der Aufnahmeöffnung 3 relativ zu dem Futterkörper 2 um 180° zu verdrehen, denn das Werkstück 7 ist von beiden offenen Stirnseiten zu bearbeiten. Zunächst wird nämlich ein Teil des Innengewindes von einer ersten offenen Stirnseite in die Innenwand des Werkstückes 7 und anschließend, nachdem das Werkstück 7 um 180° mit Hilfe des Schwenkringes 5 in dem Futterkörper 2 verdreht ist, in die zweite offene Stirnseite des Werkstückes 7 eingearbeitet.

Für die Verschwenkung des Schwenkringes 5 sind zwei in dem Futterkörper 2 angeordnete Drehzapfen 11 und 12 vorgesehen, die in Richtung der Längsachse 4 des Futterkörpers 2 abstehen und eine gemeinsame Schwenkachse 13 bilden.

Es ist besonders erfindungswesentlich, dass die von den drei Spannbacken 6 gebildeten Spannachsen 6' winkelversetzt zu der Schwenkachse 13 verlaufen. Der Winkelabstand zwischen der Schwenkachse 13 und einer der Spannachsen 6' beträgt 30°. Ändert sich jedoch der Teilungswinkel der Spannachsen 6' zueinander, da mehrere Spannbacken 6 vorgesehen werden, verändert sich dieser Winkelabstand entsprechend.

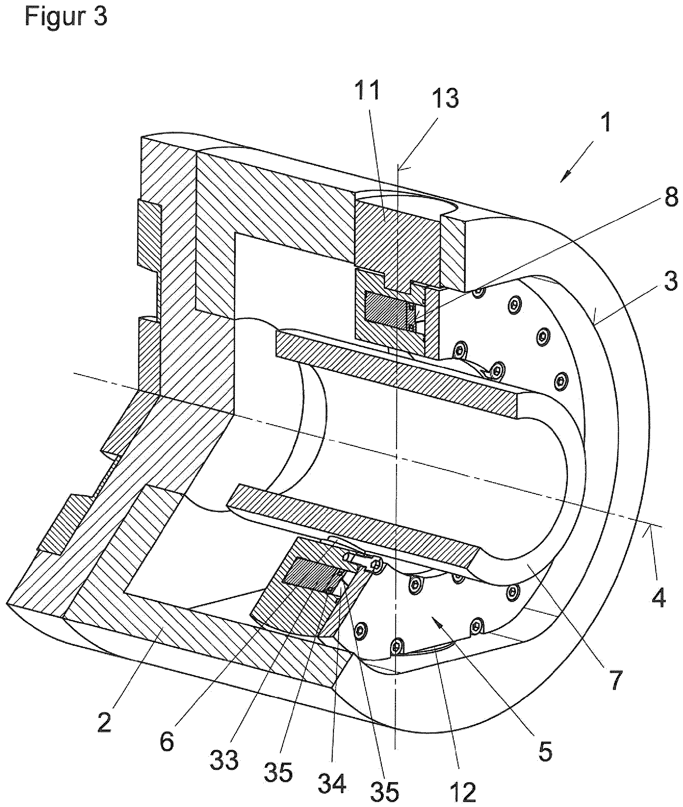

In den Figuren 2 und 3 sowie 5a ist zudem gezeigt, dass die in dem Schwenkring 5 eingebaute Zustelleinrichtung 8 die radiale Bewegung der jeweiligen Spannbacken 6 ermöglicht. Die Zustelleinrichtung 8 umfasst dabei einen Synchronring 33 und einen Deckel 34 des Synchronringes 33, der mit Hilfe einer Dichtung 35 einen Hydraulik- oder Pneumatikkreislauf 38 abdichtet. Durch eine in dem Hydraulik- oder Pneumatikkreislauf 38 eingebaute, nicht dargestellte Pumpe, wird nämlich das Fördermedium gleichmäßig von einer Seite der Zustelleinrichtung 8 in die gegenüberliegende Seite der Zustelleinrichtung 8 gepumpt, so dass der Synchronring 33 parallel zu der Längsachse 4 des Futterkörpers 2 hin und her bewegt ist.

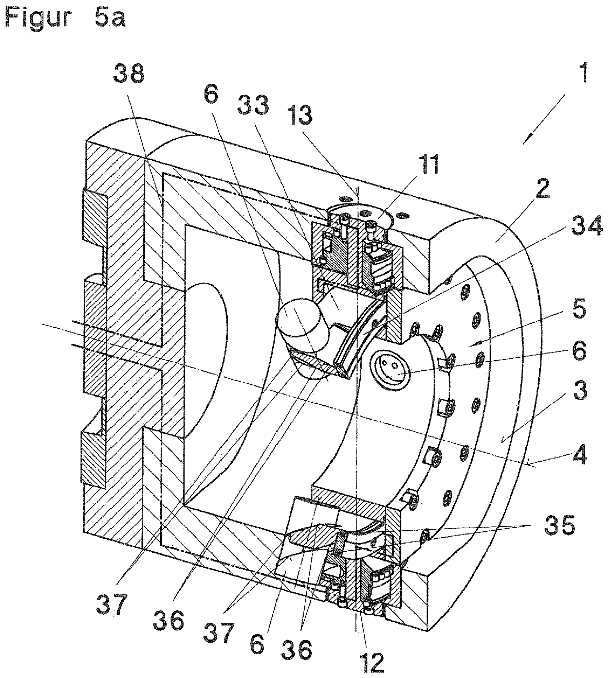

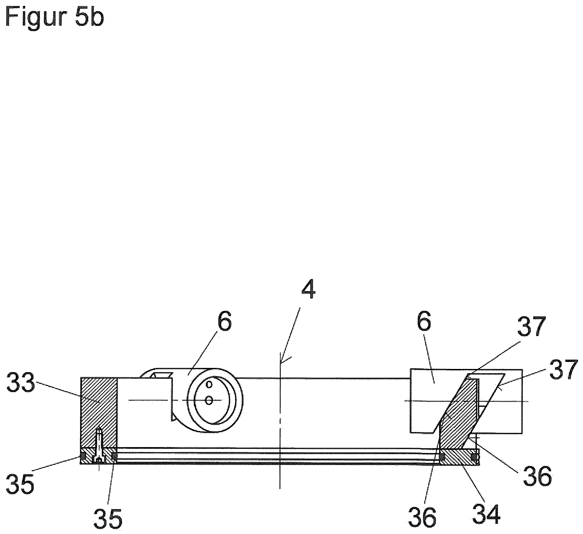

Die drei Spannbacken 6 sind in dem Schwenkring 5 derart eingebaut, dass diese in kraft- oder formschlüssiger Wirkverbindung mit dem Synchronring 33 stehen. Insbesondere den Figuren 5a und 5b ist dabei zu entnehmen, dass an dem Synchronring 33 jeweils eine geneigt verlaufende Antriebsfläche 36 angearbeitet ist, auf der eine an dem jeweiligen Spannbacken 6 angearbeitete Anlagefläche 37 aufliegt. Sobald demnach der Synchronring 33 in Richtung des offenen Endes des Futterkörpers 2 bewegt ist, werden die drei Spannbacken 6 synchron aus dem Schwenkring 5 in Richtung des Werkstückes 7 herausgedrückt und gelangen folglich mit diesem in einen kraftschlüssigen Wirkkontakt, durch den das Werkstück 7 an dem Futterkörper 2 zentrisch arretiert ist.

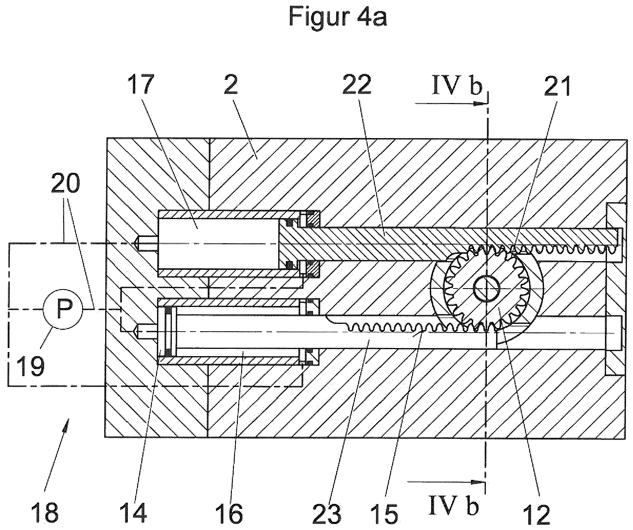

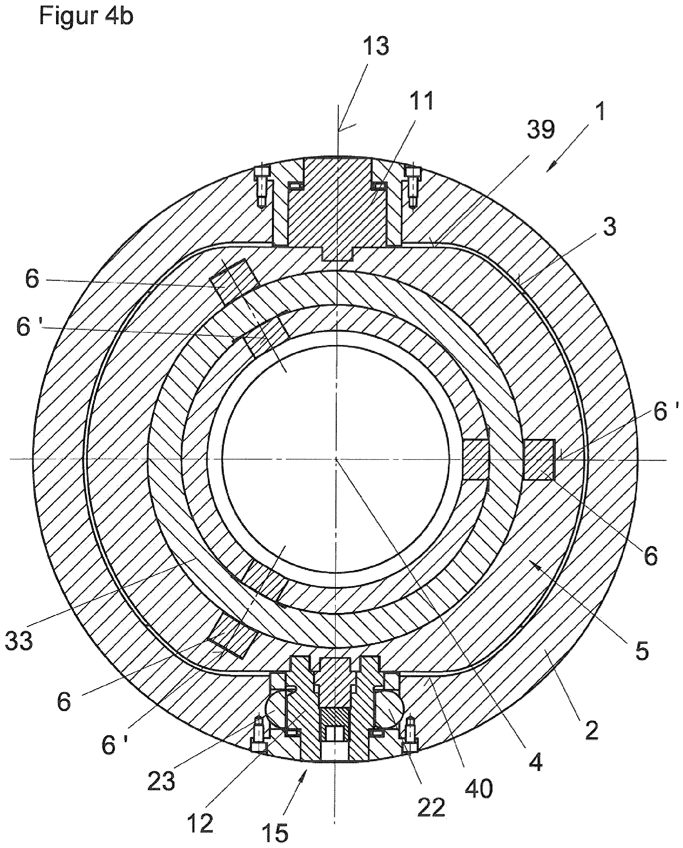

In den Figuren 4a und 4b ist das Verschwenkprinzip des Schwenkringes 5 abgebildet. Einer der beiden gegenüberliegenden Drehzapfen 11 oder 12 steht dabei in formtschlüssiger Wirkverbindung mit einem Antriebs-Kolben 14. Der Antriebs-Kolben 14 treibt über ein Zwischenglied 15 den Drehzapfen 12 im gezeigten Ausführungsbeispiel, wie dies nachfolgend näher erläutert ist, an. Der Kolben 14 und das Zwischenglied 15 können ebenso mit den Drehzapfen 11 trieblich gekoppelt sein. Es ist auch möglich, beide Drehzapfen 11 und 12 synchron, also gleichzeitig, anzutreiben, so dass dann zwei Kolben 14 und zwei Zwischenglieder 15 für jeden der beiden Drehzapfen 11, 12 vorzusehen sind. In den Figuren 4a und 4b ist zudem gezeigt, dass der Antriebs-Kolben 14 zwei in dem Futterkörper 2 eingearbeitete Druckräume 16 und 17 voneinander trennt. Die beiden Druckräume 16 und 17 sind über Steuerleitungen 18 miteinander verbunden. In der Steuerleitung 18 ist eine Pumpe 19 vorgesehen, durch die ein Medium, beispielsweise eine Hydraulikflüssigkeit oder ein Gas, wechselweise gefördert ist, so dass der Antriebs-Kolben 14 zwischen den beiden Druckräumen 16, 17 hin und her bewegbar ist und folglich eine Linearbewegung ausführt.

Der Antriebs-Kolben 14 ist über das Zwischenglied 15 trieblich mit dem Drehzapfen 12 verbunden. An der Außenmantelfläche des Drehzapfens 12 ist eine Außenverzahnung 21 angearbeitet.

Das Zwischenglied 15 besteht aus zwei parallel zueinander verlaufenden Zahnstangen 22 und 23, deren jeweilige Zahnreihe aufeinander zuweisen; die beiden Zahnstangen 22, 23 bilden dabei eine Gabel oder ein U-Profil. Zwischen den beiden Zahnstangen 22, 23 ist die Verzahnung 21 des Drehzapfen 12 angeordnet. Die Verzahnungen der Zahnstangen 22, 23 greifen in die Außenverzahnung 21 des Drehzapfens 12 ein, so dass zwischen dem Drehzapfen 12 und dem Zwischenglied 15 eine permanente formschlüssige oder triebliche Wirkverbindung besteht.

Dabei kann das Zwischenglied 15 auch in Form eines Keilriemens- oder Kettantriebes oder auch in Form einer Gewindespindel ausgestaltet sein.

Die beiden Zahnstangen 22, 23 verlaufen parallel zu der Längsachse 4, so dass sich deren Bauraum in dieser Richtung erstreckt, um möglichst wenig Bauraum zu benötigen, wodurch der Außenumfang des Futterkörpers 2 gering bemessen werden kann.

Sobald demnach der Antriebs-Kolben 14 durch die Pumpe 19 hin und her bewegt ist, verdreht sich der Drehzapfen 12 in die entsprechende Drehrichtung. Dabei ist die Länge der Zahnstangen 22 derart bemessen, dass der Drehzapfen 12 eine Verdrehbewegung um 180° in eine erste Drehrichtung vollzieht. Beim Zurückfahren des Kolbens 14 und der Zahnstangen 22 rotiert der Drehzapfen 12 in die entgegengesetzte Richtung.

Wenn der Drehzapfen 12 durch den Antriebs-Kolben 14 um 180° in eine Drehrichtung und entgegengesetzt dazu verschwenkt ist, dann dreht der gegenüberliegende Drehzapfen 11 mit. Dieser ist folglich über den Schwenkring 5 mit dem Drehzapfen 12 verbunden.

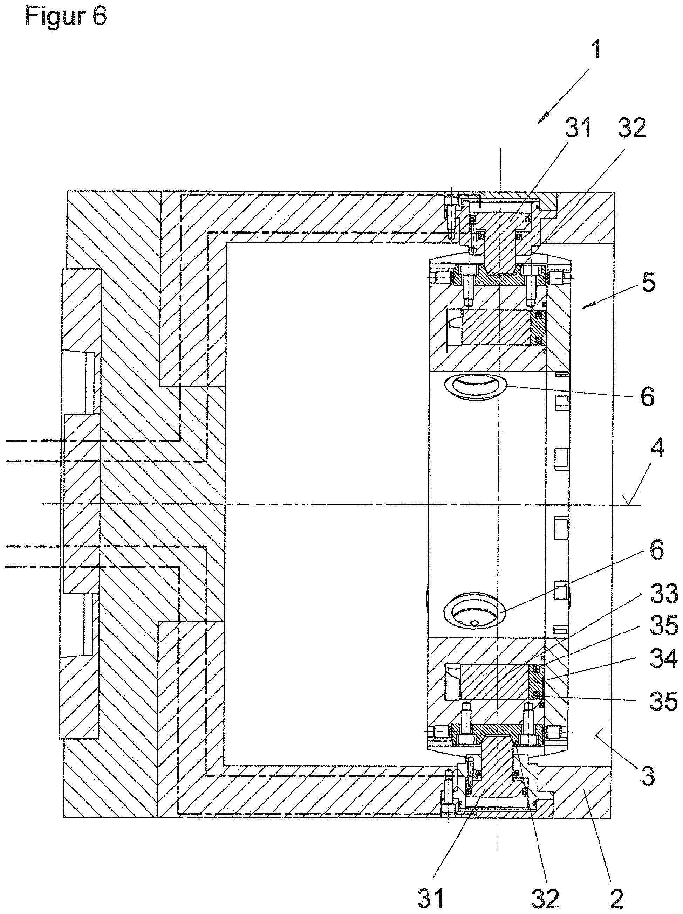

Aus Figur 6 ist zu entnehmen, dass der Schwenkring 5 mittels zweier Haltezapfen 31, die gegenüberliegend zueinander angeordnet sind und ein Paar bilden, an dem Futterkörper 2 abgestützt ist. Durch die beiden Haltezapfen 31 wird eine Fixierachse 31' geschaffen, die winkelversetzt von der Schwenkachse 13 und den von den Spannbacken 6 jeweils gebildeten Spannachsen 6' verläuft. Im gezeigten Ausführungsbeispiel beträgt der Winkelabstand zwischen der Fixierachse 31' und der Schwenkachse 13 115°. Die Haltezapfen 31 sind radial beweglich in dem Futterkörper 2 gelagert und können in Richtung des Schwenkringes 5 zugestellt werden. In die Außenmantelfläche des Schwenkringes 5 sind im Bereich der Haltezapfen 31 zwei Aussparungen 32 eingearbeitet, deren Innenkontur an die Außenkontur der Haltezapfen 31 angepasst ist, so dass die Haltezapfen 31 während des Bearbeitungsvorganges des Werkstückes 7 in die fluchtend dazu verlaufenden Aussparungen 32 eingreifen, kann die Position des Haltezapfens 31 mittels einer Überwachungseinrichtung festgestellt werden und in Abhängigkeit von dieser Lage wird die Bewegung der Kolben 14 freigegeben oder blockiert.

Sobald die Haltezapfen 31 in die jeweilige Aussparung 32 eingreifen, wird der Schwenkring 5 zusätzlich in Rotationsrichtung an dem Futterkörper 2 abgestützt. Darüber hinaus ist an der Innenwand der Aufnahmeöffnung 3 des Futterkörpers 2 eine Planfläche 40 angearbeitet. Auf der Außenmantelfläche des Schwenkringes 5 ist eine Anlagefläche 39 vorgesehen, die im montierten Zustand des Schwenkringes 5 fluchtend zu der Planfläche 40 der Aufnahmeöffnung 3 ausgerichtet ist. Die Anlagefläche 39 und die Planfläche 40 verlaufen senkrecht zu der Schwenkachse 13, so dass der Schwenkring 5 parallel zu der Planfläche 40 verdreht werden kann. Die Anlagefläche 39 des Schwenkringes 5 und die Planfläche 40 der Aufnahmeöffnung 3 verhindern eine Verdrehung des Schwenkringes 5 während der Rotation des Futterkörpers 2, so dass die Rotationskräfte des Futterkörpers 2 über die Haltezapfen 31 sowie die Aussparungen 32 und auf die Anlagefläche 39 übertragen sind.

## Patentansprüche

1. Schwenk-Spannfutter (1)
- mit einem Futterkörper (2), in dem eine zentrisch zu der Längsachse (4) des Futterkörpers (2) verlaufende Aufnahmeöffnung (3) eingearbeitet ist,
- mit einem in der Aufnahmeöffnung (3) des Futterkörpers (2) eingesetzten Schwenkring (5), an dem mindestens drei radial zu der Längsachse (4) des Futterkörpers (2) zustellbare Spannbacken (6) gelagert sind, durch die ein zu bearbeitendes rotationssymmetrisches Werkstück (7) zentrisch zu der Längsachse (4) des Futterkörpers (2) in diesem arretiert ist,
- mit einer in den Schwenkring (5) eingesetzten Zustelleinrichtung (8), durch die die Spannbacken (6) synchron bewegbar sind,
- mit zwei in dem Futterkörper (2) gelagerten und eine Schwenkachse (13) bildenden Drehzapfen (11, 12), die in form- oder kraftschlüssiger Wirkverbindung mit dem Schwenkring (5) stehen und
- mit mindestens einem Antriebsmittel, das mit einem der Drehzapfen trieblich verbunden ist,
**dadurch gekennzeichnet,**
**dass** die Spannachsen (6') der Spannbacken (6) versetzt zu der von den Drehzapfen (11, 12) gebildeten Schwenkachse (13) verlaufen, dass die Zustelleinrichtung (8) der mindestens drei Spannbacken (6) aus einem Synchronring (33) gebildet ist, der parallel zu der Längsachse (4) des Futterkörpers (2) in dem Schwenkring (5) verschiebbar gelagert ist, dass an dem Synchronring (33) im Bereich der jeweiligen Spannbacke (6) eine geneigt verlaufende Antriebsfläche (36) bezogen auf die Längsachse (4) des Futterkörpers (2) angearbeitet ist, dass an der jeweiligen Spannbacke (6) eine Anlagefläche (37) vorgesehen ist, die mit der Antriebsfläche (36) des Synchronrings (33) derart zusammenwirkt, dass die Spannbacken (6) radial aus dem Schwenkring (5) bewegt sind, dass in dem Futterkörper (2) zwei gegenüberliegende Haltezapfen (31) radial beweglich gelagert sind, dass die von den Haltezapfen (31) gebildete Fixierungsachse (31') versetzt zu der Schwenkachse (13) und der von den Spannbacken (6) gebildeten Spannachsen (6'), vorzugsweise in einem Winkel von 115° bezogen auf die Schwenkachse (13), verläuft, dass in den Schwenkring (5) jeweils zwei Paare von Aussparungen (32) eingearbeitet sind, die in Richtung des Futterkörpers (2) ausgerichtet sind, dass im Arretierungszustand die Haltezapfen (31) in eines der Paare von Aussparungen (32) eingreift, dass mittels einer elektrischen und/oder mechanischen Überwachungseinrichtung die Position der jeweiligen Haltezapfen (31) feststellbar ist, und dass in Abhängigkeit von der Position der Haltezapfen (31) die Bewegungen der Antriebsmittel (14) freigegeben oder blockiert sind.

2. Spannfutter nach Anspruch 1,
**dadurch gekennzeichnet,**
**dass** durch mindestens einen Antriebs-Kolben (14) die Drehzapfen (11, 12) miteinander um einen Rotationswinkel (a), vorzugsweise von 180°, verdreht sind, dass der jeweilige Antriebs-Kolben (14) als im Futterkörper (2) axial beweglicher Kolben (14) ausgestaltet ist, dass einer der beiden Drehzapfen (11 oder 12) mit dem Kolben (14) über ein Zwischenglied (15, 22, 23) in trieblicher Wirkverbindung steht, dass jeder Kolben (14) zwei Druckräume (16, 17) voneinander trennt, und dass in die Kolben (14) mittels einer Pumpe (19), durch die ein Medium in die Druckräume (16, 17) wechselweise gepumpt ist, hin und her bewegt ist bzw. sind.

3. Spannfutter nach Anspruch 2,
**dadurch gekennzeichnet,**
**dass** das Zwischenglied (15) als zwei parallel zueinander verlaufende Zahnstangen (22, 23) ausgestaltet ist, die die Form einer Gabel oder eines U-Profils aufweisen, dass die Zahnstangen (22, 23) jeweils mit deren Verzahnung einem der Drehzapfen (11 oder 12) zugewandt sind und mit diesem in trieblicher Wirkverbindung stehen.

4. Spannfutter nach einem der vorgenannten Ansprüche 2 oder 3,
**dadurch gekennzeichnet,**
**dass** der Kolben (14) parallel zu der Längsachse (4) des Futterkörpers (2) ausgerichtet sind.

5. Spannfutter nach Anspruch 1,
**dadurch gekennzeichnet,**
**dass** der Synchronring (33) in einem Hydraulik- oder Pneumatikkreislauf (38) angeordnet ist und dass der Synchronring (33) wechselweise zur axialen Bewegung mit einem Medium beaufschlagt ist.

6. Spannfutter nach einem der vorgenannten Ansprüche,
**dadurch gekennzeichnet,**
**dass** der Futterkörper (2) im Betriebszustand um die Längsachse (4) rotiert und dass die Rotationsbewegungen des Futterkörpers (2) auf den Schwenkring (5) übertragen sind.

7. Spannfutter nach einem der vorgenannten Ansprüche,
**dadurch gekennzeichnet,**
**dass** an der äußeren Mantelfläche des Schwenkringes (5) zwei zueinander gegenüberliegende Anlageflächen (39) angearbeitet sind und dass die Aufnahmeöffnung (3) des Futterkörpers (2) zwei Planflächen (40) aufweist, die fluchtend zu der Anlagefläche (39) des Schwenkringes (5) im montierten Zustand verlaufen.

8. Spannfutter nach Anspruch 7,
**dadurch gekennzeichnet,**
**dass** die Anlagefläche (39) des Schwenkringes (5) und die Planfläche (40) der Aufnahmeöffnung (3) des Futterkörpers (2) orthogonal zu der Schwenkachse (13) der Drehzapfen (11, 12) ausgerichtet sind.

## Claims

1. A pivoting collet chuck (1)
- comprising a chuck body (2) in which an accommodating opening (3) is worked into the chuck body (2) and runs centrally in relation to its longitudinal axis (4),
- comprising a pivoting ring (5) inserted in the accommodating opening (3) of the chuck body (2), on which pivoting ring (5) at least three clamping jaws (6) that can be advanced radially perpendicularly to the longitudinal axis (4) of the chuck body (2) are supported, by means of which a rotationally symmetrical workpiece (7) to be machined is locked in the chuck body (2) centrally in relation to its longitudinal axis (4),
- comprising an advancing device (8) which is inserted into the pivoting ring (5) and by means of which the clamping jaws (6) can be moved synchronously,
- comprising two pivot pins (11, 12) which are supported in the chuck body (2) and which form a pivot axis (13) and are in a non-positive or positive active connection with the pivoting ring (5) and
- comprising at least one driving means in a driving connection with one of the pivot pins,
**characterised in that**
the clamping axes (6') of the clamping jaws (6) run offset to the pivot axis (13) formed by the pivot pins (11, 12), that the advancing device (8) of the at least three clamping jaws (6) is formed by a synchronising ring (33) which is supported so as to be movable parallel to the longitudinal axis (4) of the chuck body (2) in the pivoting ring (5), that a driving surface (36) extending at an angle to the longitudinal axis (4) of the chuck body (2) is worked onto the synchronising ring (33) in the region of the respective clamping jaw (6), that a contact surface (37) is provided on the respective clamping jaw (6), which contact surface (37) interacts with the driving surface (36) of the synchronising ring (33) in such a way that the clamping jaws (6) are moved radially out of the pivoting ring (5), that the two holding pins (31) located opposite to one another are mounted in the chuck body (2) so as to be radially movable, that the fixation axis (31') formed by the holding pins (31) is offset in relation to the pivot axis (13) and the clamping axes (6') formed by the clamping jaws (6), preferably running at an angle of 115° in relation to the pivot axis (13), that two pairs of openings (32) are worked into each pivoting ring (5), they are aligned in the direction of the chuck body (2), that in the locking position, the holding pins (31) engage in one of the pairs of openings (32), that the position of the corresponding holding pin (31) can be established using an electric and/or mechanical monitoring device, and that depending on the position of the holding pins (31), the movements of the driving means (14) are enabled or blocked.

2. The chuck in accordance with Claim 1,
**characterised in that**
the pivot pins (11, 12) are jointly pivoted through an angle of rotation (α), preferably 180°, by at least one drive piston (14), that the particular drive piston (14) is configured to be an axially movable piston (14) in the chuck body (2), that one of the two pivot pins (11 or 12) is in a drivable active connection with the piston (14) via an intermediate element (15, 22, 23), that each piston (14) separates two pressure chambers (16, 17) from one another and that the pistons (14) are moved back and forth by means of a pump (19) which pumps a medium alternately into the pressure chambers (16, 17).

3. The chuck in accordance with Claim 2,
**characterised in that**
the intermediate piece (15) is configured as two racks (22, 23) running parallel to one another with the shape of a fork or a U-section, that the racks (22, 23) each have their toothed profiles pointing towards one of the pivot pins (11 or 12), and are in a driving connection with the latter.

4. The chuck in accordance with one of the aforementioned Claims 2 or 3,
**characterised in that**
the piston (14) is aligned parallel to the longitudinal axis (4) of the chuck body (2).

5. The chuck in accordance with Claim 1,
**characterised in that**
the synchronising ring (33) is arranged in a hydraulic or pneumatic circuit (38) and that the synchronising ring (33) has a medium applied to it in alternating directions for axial movement.

6. The chuck in accordance with one of the aforementioned Claims,
**characterised in that**
the chuck body (2) rotates about the longitudinal axis (4) in the operating condition, and that the rotational movements of the chuck body (2) are transferred to the pivoting ring (5).

7. The chuck in accordance with one of the aforementioned Claims,
**characterised in that**
two contact surfaces (39) located opposite one another are worked onto the outer jacket surface of the pivoting ring (5) and that the accommodating opening (3) of the chuck body (2) has two plane surfaces (40) that run flush with the contact surface (39) of the pivoting ring (5) in the assembled condition.

8. The chuck in accordance with Claim 7,
**characterised in that**
the contact surface (39) of the pivoting ring (5) and the plane surface (40) of the accommodating opening (3) of the chuck (2) are aligned at right angles to the pivot axis (13) of the pivot pins (11, 12).

## Revendications

1. Mandrin de serrage pivotant (1)
comprenant :
- un corps de mandrin (2) dans lequel il est pratiqué une ouverture de réception (3) centrée par rapport à l'axe longitudinal (4) du corps de mandrin (2),
- un anneau de pivotement (5) inséré dans l'ouverture de réception (3) du corps de mandrin (2), dans lequel il est logé au moins trois mors de serrage (6) avançant radialement par rapport à l'axe longitudinal (4) du corps de mandrin (2) et qui permettent de positionner dans celui-ci une pièce à usiner à symétrie de rotation (7) centrée par rapport à l'axe longitudinal (4) du corps de mandrin (2),
- un équipement d'avance (8) monté dans l'anneau de pivotement (5) qui permet de déplacer les mors de serrage (6) de manière synchrone,
- deux pivots (11, 12) logés dans le corps de mandrin (2), qui forment un axe de pivotement (13), et qui se trouvent en liaison d'actionnement par la forme et la force avec l'anneau de pivotement (5), et
- au moins un moyen d'entraînement qui est en liaison d'entraînement avec un des pivots,
**caractérisé en ce que**
les axes de serrage (6') des mors de serrage (6) sont décalés de l'axe de pivotement (13) formé par les pivots (11, 12), que l'équipement d'avance (8) des au moins trois mors de serrage (6) est formé par un anneau synchrone (33) qui est logé de manière déplaçable et parallèlement à l'axe longitudinal (4) du corps de mandrin (2) dans l'anneau de pivotement (5), que sur l'anneau synchrone (33), il est pratiqué au niveau du mors de serrage respectif (6), une face d'entraînement (36) inclinée par rapport à l'axe longitudinal (4) du corps de mandrin (2), que sur le mors de serrage respectif (6), il est prévu une face de butée (37) collaborant avec la face d'entraînement (36) de l'anneau synchrone (33) de sorte que les mors de serrage (6) sont déplacés radialement hors de l'anneau de pivotement (5), que dans le corps de mandrin (2) il est monté, radialement mobiles, deux tenons de retient opposés (31), que l'axe de positionnement (31') formé par les tenons de retient (31) est décalé de l'axe de pivotement (13) et des axes de serrage (6') formés par les mors de serrage (6), de préférence sous un angle de 115° par rapport à l'axe de pivotement (13), que dans l'anneau de pivotement (5), il est pratiqué respectivement deux paires d'évidements (32) orientés en direction du corps de mandrin (2), qu'en état positionné, les tenons de retient (31) s'engrènent dans une des paires d'évidements (32), que moyennant un équipement de surveillance électrique et/ou mécanique, il est possible d'identifier la position des tenons de retient respectifs (31), et que, en dépendance de la position des tenons de retient (31), il est permis ou interdit le mouvement des moyens d'entraînement (14).

2. Mandrin de serrage d'après la revendication 1
**caractérisé en ce que**,
à l'aide d'au moins un piston d'entraînement (14), les pivots (11, 12) sont tournés ensemble autour d'un angle de rotation (a), de préférence de 180°, que le piston d'entraînement respectif (14) est conçu sous la forme d'un piston (14) axialement déplaçable dans le corps de mandrin (2), que moyennant un élément intermédiaire (15, 22, 23), un des deux pivots (11 ou 12) se trouve en liaison d'actionnement avec le piston (14), que chaque piston (14) sépare deux chambres de pression (16, 17) l'une de l'autre, et que, à l'aide d'une pompe (19), qui refoule un milieu alternativement dans les chambres de pression (16, 17), les pistons (14) effectuent un mouvement de va et vient.

3. Mandrin de serrage d'après la revendication 2
**caractérisé en ce que**
l'élément intermédiaire (15) est conçu sous la forme de deux crémaillères parallèles (22, 23) ayant la forme d'une fourchette ou d'un profil en U, que les dentures des crémaillères respectives (22, 23) donnent sur un des pivots (11 ou 12) et se trouvent en liaison d'entraînement avec celui-ci.

4. Mandrin de serrage d'après une des revendications précédentes 2 ou 3
**caractérisé en ce que**
le piston (14) est aligné parallèlement à l'axe longitudinal (4) du corps de mandrin (2).

5. Mandrin de serrage d'après la revendication 1
**caractérisé en ce que**
l'anneau synchrone (33) se trouve dans un circuit hydraulique ou pneumatique (38) et que pour le mouvement axial, l'anneau synchrone (33) est soumis alternativement à un milieu.

6. Mandrin de serrage d'après une des revendications précédentes
**caractérisé en ce que**,
en action, le corps de mandrin effectue une rotation autour de l'axe longitudinal (4) et que les mouvements de rotation du corps de mandrin (2) sont transférés à l'anneau de pivotement (5).

7. Mandrin de serrage d'après une des revendications précédentes
**caractérisé en ce que**,
sur l'enveloppe extérieure de l'anneau de pivotement (5), il est pratiqué deux faces de butée opposées l'une à l'autre (39) et que l'ouverture de réception (3) du corps de mandrin (2) comporte deux faces planes (40) qui, une fois montées, sont en alignement précis sur la face de butée (39) de l'anneau de pivotement (5).

8. Mandrin de serrage d'après la revendication 7
**caractérisé en ce que**
la face de butée (39) de l'anneau de pivotement (5) et la face plane (40) de l'ouverture de réception (3) du corps de mandrin (2) sont alignées orthogonalement sur l'axe de pivotement (13) des pivots (11, 12).
